Europäisches Patentamt

European Patent Office

Office européen des brevets

(11) Publication number: **0 209 280**
**B1**

(12) **EUROPEAN PATENT SPECIFICATION**

(45) Date of publication of patent specification: **27.12.90**

(51) Int. Cl.⁵: **F 16 F 1/36, F 16 F 15/08**

(21) Application number: **86305001.9**

(22) Date of filing: **27.06.86**

(54) Anti-vibration mount.

(30) Priority: **03.07.85 GB 8516839**

(43) Date of publication of application:
**21.01.87 Bulletin 87/04**

(45) Publication of the grant of the patent:
**27.12.90 Bulletin 90/52**

(84) Designated Contracting States:
**AT BE CH DE FR GB IT LI LU NL SE**

(56) References cited:
**DE-C- 595 632
DE-U-1 986 854
FR-A-2 102 645
FR-A-2 529 979
US-A-1 871 963
US-A-2 460 829
US-A-2 462 011
US-A-2 468 901**

(73) Proprietor: **Isolated Systems Limited**
**Adams Close, Heanor Gate Industrial Estate**
**Heanor Derbyshire DE7 7GX (GB)**

(72) Inventor: **Best, Anthony**
**Vale Cottage**
**Coulston Westbury (GB)**
Inventor: **Spackman, Clive John**
**44 New King Street**
**Bath Avon (GB)**

(74) Representative: **Dealtry, Brian et al**
**Eric Potter & Clarkson St. Mary's Court St.**
**Mary's Gate**
**Nottingham NG1 1LE (GB)**

## Description

The present invention relates to an anti-vibration mount.

Anti-vibration mounts are commonly used for the mounting of vibration creating machinery onto static supports. Various types of anti-vibration mounts have been proposed in the past and generally they incorporate a resilient material such as an elastomer for isolating the machinery to be mounted from the support. In such arrangements the resilient material is usually bonded to other parts of the mount in order to provide a unitary unit. During use, it is a common occurrance for the bonding to fail resulting in separation of the resilient material from the component to which is was bonded. Such separation usually results in the mount losing its ability to perform as a vibration isolator and in certain designs results in separation of the machinery from the support.

It is a general aim of the present invention to provide an anti-vibration mount which uses an elastomeric material which is not bonded to adjacent components. It is an additional aim of the present invention to provide a mount which retains unitary integrity should the elastomeric material disintegrate.

It is known from US patent 2462011 to provide an anti-vibration mount including a first conical seat for attachment to a structure to be mounted and a second conical seat for attachment to a support structure and a unitary annular member located between the first and second seats, the unitary member comprising a plurality of resiliently deformable balls connected to one another by a connection portion. The balls are sidely spaced apart and are not in peripheral contact with one another.

According to the present invention there is provided an anti-vibration mount including a first conical seat for attachment to a structure to be mounted and a second conical seat for attachment to a support structure and a unitary annular member located between the first and second seats, the unitary member comprises a plurality of resiliently deformable balls connected to one another by a connecting portion characterised in that neighbouring balls are joined in peripheral contact with one another by a connection portion (15a) at and concentrically with the point of peripheral contact between the balls.

Reference is now made to the accompanying drawings, in which:-

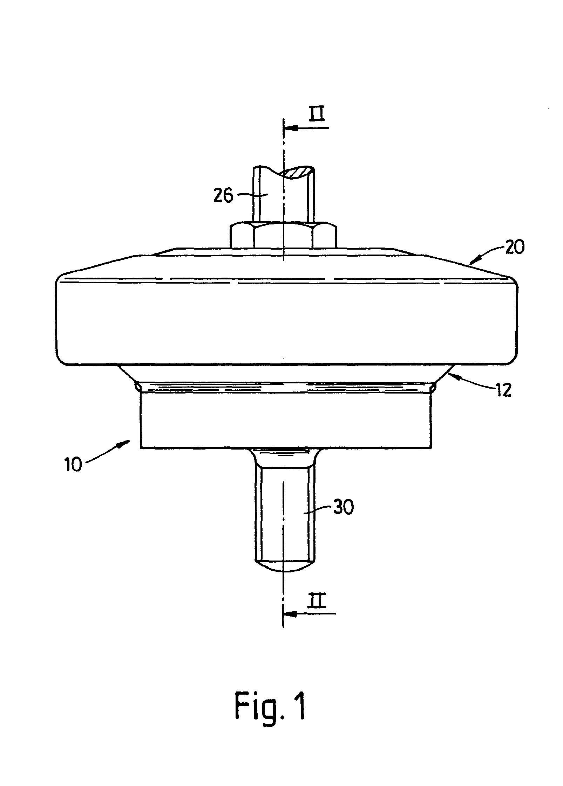

Figure 1 is a side view of a mount according to the present invention;

Figure 2 is an axial section of the mount shown in Figure 1 taken along line II—II;

Figure 3 is a sectional view of the mount shown in Figure 2 taken along line III—III; and

Figure 4 is a graph illustrating a plot of natural frequency of a mount v static load.

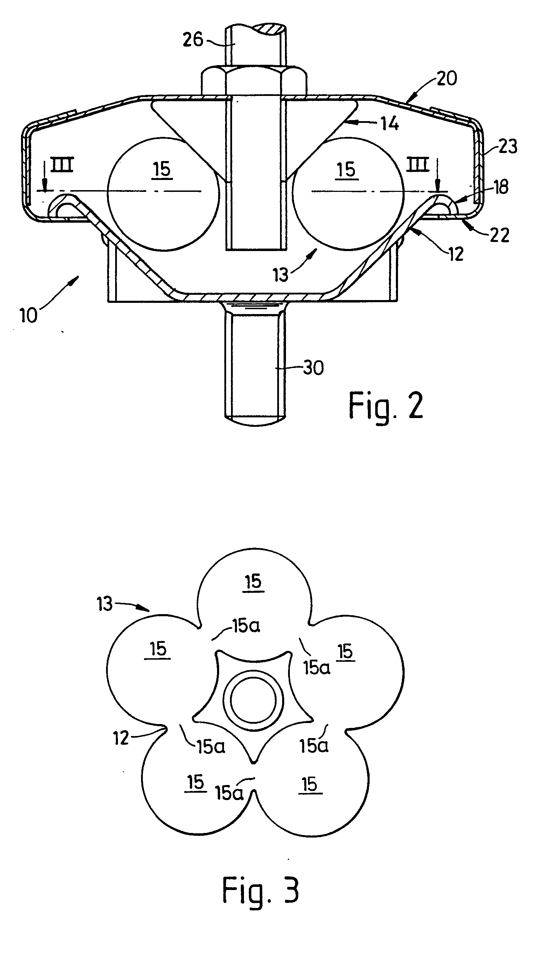

The mount 10 includes a lower conical seat 12 and an upper conical seat 14. Located between the upper and lower conical seats is a unitary annular member 13. The member 13 is preferably a one piece moulding formed from an elastomeric material having suitable resilient characteristics such as for instance natural rubber. The annular member 13 illustrated comprises a series of balls 15 which are closely spaced and joined at their peripheries to one another by a connection portion 15a. The connection portion 15a between each pair of balls 15 is preferably located concentrically with the point of peripheral contact between the pair of balls. In Figure 3, the annular member 13 is shown as comprising 5 balls but it will be appreciated that the annular member can comprise more or less than 5 balls.

The annular member 13 is merely seated between the upper and lower conical seats and is not secured to either seat.

The lower seat 12 is conveniently a metal pressing and is provided with an outwardly directed flange 18. The upper seat 14 is secured to a housing 20 which includes an inwardly directed flange 22. Flanges 18 and 22 overlap and thereby co-operate with one another to prevent separation of the upper and lower seats. Accordingly the mount is a unitary assembly which is capable of retaining unitary integrity even should the annular member disintegrate. The flanges 18 and 22 also co-operate to hold the balls 15 under a predetermined loading so that they are retained in a compressed state.

The flange 22 is formed during assembly by inwardly turning the terminal marginal portion of a band 23 which forms part of the housing 20.

The upper seat 14 is provided with attachment means for attaching the upper seat to the machinery or structure to be mounted. In the illustrated embodiment the attachment means is in the form of a screw threaded shaft 26.

The lower seat 12 is similarly provided with attachment means in the form of a screw threaded shaft 30 for attaching the lower seat to the support structure (not shown).

It will be appreciated that alternative types of attachment means for the upper and lower seat may be provided if desired.

In use, the annular member 13 acts as a bracelet of individual balls 15 which are able to roll relative to the upper and lower conical seats.

The resilience of the balls 15 acts upon the conical seats 12, 14 to bias them to a co-axial position. Forces applied to one of the seats from any direction causes compression of some or all of the balls which resist the applied force in a progreesive manner, i.e. the greater the deflection the greater the resistance to the deflection to provide the desired anti-vibration characteristics. During compression the balls roll relative to the conical seats and are deformed to accommodate adjacent spaces surrounding the balls. The central portions 15a provide relatively little resistance to twisting forces and so adjacent balls are able to roll relative to one another and in the confines of the mount act as individual balls. However, since all the balls are joined together by the central portions 15a it is not possible for any one of the balls to become incorrectly positioned relative to the other balls.

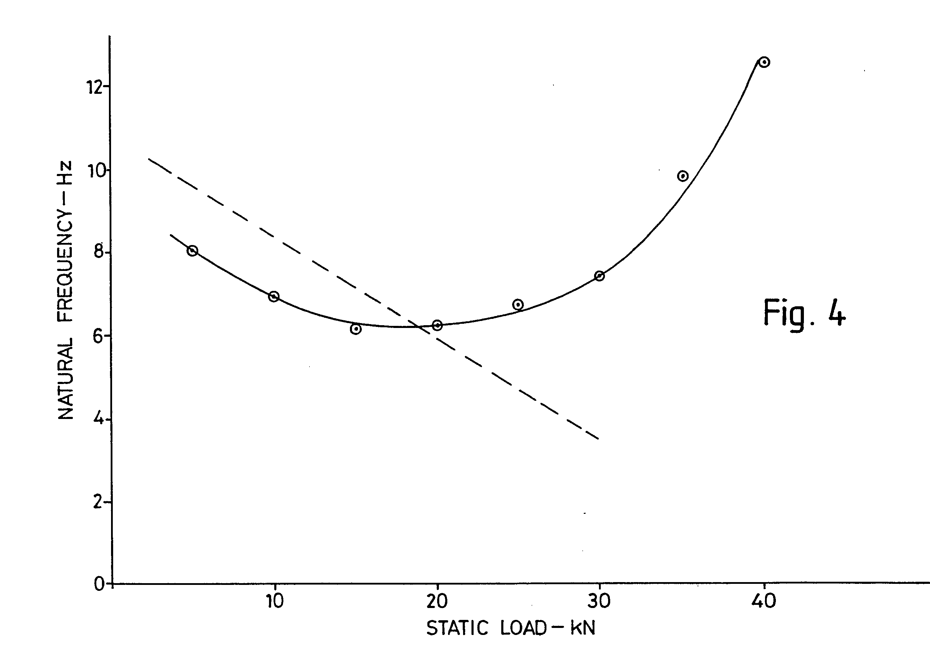

The ability of the mount of the present invention to progressively resist deflection as mentioned above provides greater flexibility of use applications for mount. For instance, if reference is made to the graph depicted in Figure 4 a natural frequency V static load plot is shown in a solid line of a mount having five balls of an elastomeric material having a shore hardness of 60—65.

When mounting a machine on a structure, it is important that all the mounts have approximately the same natural frequency. Since the natural frequency of a mount is altered by the applied weight, in the past it has been necessary to calculate at the mounting locations the applied weight acting at the location and choose a mount capable of supporting that applied weight and have the desired natural frequency. As can be seen from the plot shown in Figure 4, the present mount is capable of producing a natural frequency of between 6 to 8 Hz for applied loads varying between 0.5 to 3.2 kN i.e. for a range of 2.7 kN. For comparison purposes a mount having a constant resistance to deflection is plotted (dotted line) and it will be seen that for this mount to retain a natural frequency between 6 to 8 Hz the applied load can only vary between 1.15 kN to 1.95 kN i.e. for a range of 0.8 kN.

It will be appreciated therefore that a machine or structure to be supported can be mounted by several identical mounts of the present invention without the need to use different mounts at different locations.

## Claims

1. An anti-vibration mount including a first conical seat (14) for attachment to a structure to be mounted and a second conical seat (12) for attachment to a support structure and a unitary annular member (13) located between the first and second seats, the unitary member comprises a plurality of resiliently deformable balls (15) connected to one another by a connection portion (15a) characterised in that neighbouring balls are joined in peripheral contact with one another by a connection portion (15a) located at and concentrically with the point of peripheral contact between the balls.

2. A mount according to Claim 1, characterised in that the annular member is a one piece moulding formed from an elastomeric material such as rubber.

3. A mount according to Claim 1 or 2, wherein the first and second seats are provided with co-operating means (18, 22) for preventing separation of the seats.

4. A mount according to Claim 3, wherein the co-operating means (18, 22) serve to place the balls under a predetermined loading.

5. A mount according to Claim 3 or 4 wherein the first seat (14) is located within a housing (20) which has an inwardly directed flange (22) forming one part of the co-operating means, and the second seat (12) includes an outwardly directed flange (18) which overlaps the flange (22) and forms the other part of the co-operating means.

## Patentansprüche

1. Schwingungsdämpfungs-Lager oder -Aufhängung mit einem ersten konischen Sitz (14) für Anbringung an einem zu lagernden (aufzuhängenden) Gebilde und einem zweiten konischen Sitz (12) für Anbringung an einer Traganordnung sowie einem zwischen erstem und zweitem Sitz angeordneten einstückigen ringförmigen Element (13) mit einer Anzahl federnd oder elastisch verformbarer Kugeln (15), die durch ein Verbindungsteil (15a) miteinander verbunden sind, dadurch gekennzeichnet, daß einander benachbarte Kugeln in gegenseitiger Umfangs-(flächen-)berührung durch eine Verbindungsteil (15a), das am Punkt der Umfangsberührung der Kugeln konzentrisch dazu angeordnet ist, miteinander verbunden sind.

2. Lager oder Aufhängung nach Anspruch 1, dadurch gekennzeichnet, daß das ringförmige Element ein einstückiger Formteil aus einem elastomeren Material, wie Gummi bzw. Kautschuk, ist.

3. Lager oder Aufhängung nach Anspruch 1 oder 2, dadurch gekennzeichnet, daß erster und zweiter Sitz mit zusammenwirkenden Mitteln (18, 22) zur Verhinderung einer Trennung der Sitze versehen sind.

4. Lager oder Aufhängung nach Anspruch 3, dadurch gekennzeichnet, daß die zusammenwirkenden Mittel (18, 22) dazu dienen, die Kugeln unter eine vorbestimmte Belastung zu setzen.

5. Lager oder Aufhängung nach Anspruch 3 oder 4, dadurch gekennzeichnet, daß der erste Sitz (14) in einem Gehäuse (20) angeordnet ist, das einen einwärts gerichteten, einen Teil der zusammenwirkenden Mittel bildenden Flansch (22) aufweist, und der zweite Sitz (12) einen auswärts gerichteten Flansch (18) aufweist, welcher den Flansch (22) überlappt und den anderen Teil der zusammenwirkenden Mittel bildet.

## Revendications

1. Dispositif de montage antivibrations comprenant un premier siège tronconique (14) destiné à être fixé à une structure devant être montée, et un second siège tronconique (12) destiné à être fixé à une structure de support, ainsi qu'une pièce annulaire monobloc (13) interposée entre les premier et second sièges, la pièce monobloc comprenant de multiples sphères (15) déformables élastiquement et reliées les unes aux autres par une partie de liaison (15a), caractérisé par le fait que des sphères voisines sont reliées en contact périphérique mutuel par unt partie de liaison (15a) située au point de contact périphérique entre les sphères, et concentriquement à ce point.

2. Dispositif de montage selon la revendication 1, caractérisé par le fait que la pièce annulaire est un élément venu de moulage d'un seul tenant, à partir d'un élastomère tel que du caoutchouc.

3. Dispositif de montage selon la revendication 1 ou 2, dans lequel les premier et second sièges sont munis de moyen associés (18, 22) pour empêcher une dissociation des sièges.

4. Dispositif de montage selon la revendication 3, dans lequel les moyens associés (18, 22) servent à imposer une charge prédéterminée aux sphères.

5. Dispositif de montage selon la revendication 3 ou 4, dans lequel le premier siège (14) est situé à l'intérieur d'un boîtier (20) qui présente une collerette (22) dirigée vers l'intérieur et formant l'une des parties des moyens associés, et le second siège (12) comporte une collerette (18) dirigée vers l'extérieur, qui chevauche la collerette (22) et forme l'autre partie des moyens associés.

Fig. 1

26

20

14

III    15    15    III

23

18

22

13    12

10

30

## Fig. 2

13

15

15a

15    15

15a    15

15a

12

15a    15a

15    15

15    15a    15

## Fig. 3

Fig. 4

EP 0 209 280 B1